# EUROPÄISCHE PATENTSCHRIFT

(11) **EP 0 439 498 B1**
(45) Veröffentlichungstag und Bekanntmachung des Hinweises auf die Patenterteilung: **26.05.1993**
(21) Anmeldenummer: 89911792.3
(22) Anmeldetag: 17.10.1989
(51) Int. Cl.: H02K 11/00

(54) **SICHERHEITSSCHALTERANORDNUNG FÜR SPALTROHRMOTOREN**
SAFETY SWITCH ARRANGEMENT FOR CANNED MOTORS
DISPOSITIF DE COMMUTATION DE SECURITE POUR MOTEURS A GAINE

(30) Priorität: 22.10.1988 DE 3836066
(43) Veröffentlichungstag der Anmeldung: 07.08.1991
(73) Patentinhaber: KSB Aktiengesellschaft, 67227 Frankenthal (DE)
(72) Erfinder: HEUMANN, Anton, D-8500 Nürnberg (DE); TELLBACH, Reinhard, D-8570 Pegnitz (DE)
(86) Internationale Anmeldenummer: EP8901234
(87) Internationale Veröffentlichungsnummer: WO9004877

(56) Entgegenhaltungen:
- DE-A- 2 251 928
- FR-A- 1 120 900

## Beschreibung

Die Erfindung betrifft eine Einrichtung gemäß dem Gattungsbegriff des Patentanspruches.

Spaltrohrmotoren, die mit explosiblen Medien in Kontakt kommen, dürfen nur bis zur Erreichung einer in den einschlägigen Explosionsschutz-Vorschriften festgelegten Grenztemperatur betrieben werden. Hierbei wird unterschieden zwischen mehreren Explosionsschutz-Klassen und Temperaturklassen, die den jeweiligen Bedingungen Rechnung tragen. Die Gefahr einer Temperaturüberschreitung ergibt sich vor allem bei einem Ansteigen der Kühlmittel- und/oder der Umgebungstemperatur über 40 °C.

Um den in den Explosionsschutz-Vorschriften festgelegten Temperaturklassen zu genügen, mußte man bisher entweder eine der Klasseneinteilung entsprechende Anzahl von Motoren bereithalten oder man mußte bei Einsatz eines der jeweiligen Temperaturklasse nicht entsprechenden Motors Einbußen hinnehmen. Wählte man einen größeren Motor, so erhöhte man den Aufwand über das notwendige Maß hinaus; gehörte der Motor der darunterliegenden Temperaturklasse an, konnte man ihn nur mit reduzierter Leistung betreiben.

Der Erfindung liegt die Aufgabe zugrunde, eine Sicherheitsschalteinrichtung zu schaffen, die den Einsatz eines Spaltrohrmotors in zwei oder mehreren Temperaturklassen des Explosionsschutzes ermöglicht, die also sicherstellt, daß die jeweils gültige Temperaturklasse gewahrt bleibt und bei einer - beispielsweise durch einen Kühlmittelausfall bedingten - unzulässigen Temperaturerhöhung die Sicherheitsabschaltung des Spaltrohrmotors erfolgt.

Aus der DE-A-22 51 928 und der FR-A-1 1 2 0900 sind derartige Sicherheitsschalteinrichtungen bekannt.

Die gestellte Aufgabe wird erfindungsgemäß dadurch gelöst, daß der Spaltrohrmotor zwei oder mehrere auf unterschiedliche Grenztemperaturen ansprechende Schalter an einer für die Oberflächentemperatur aussagefähigen Stelle besitzt, wobei nur der für die jeweils gewählte Explosionsschutz-Klasse maßgebliche Schalter als Signalgeber für die Sicherheitseinrichtung dient.

Die Erfindung nutzt an sich bekannte Temperaturschalter, erreicht aber durch die gleichzeitige Anbringung von zwei oder mehreren Schaltern den wahlweisen Einsatz eines Spaltrohrmotors in verschiedenen Temperaturklassen. Der für die Herstellung und Bereithaltung der Spaltrohrmotoren zu treibende Aufwand kann somit durch eine Reduzierung der in Frage kommenden Anzahl unterschiedlicher Motoren erheblich gesenkt werden. Die erfindungsgemäße Sicherheitsschalteinrichtung ist unabhängig von den elektrischen Parametern, wie Spannung, Frequenz und Strom.

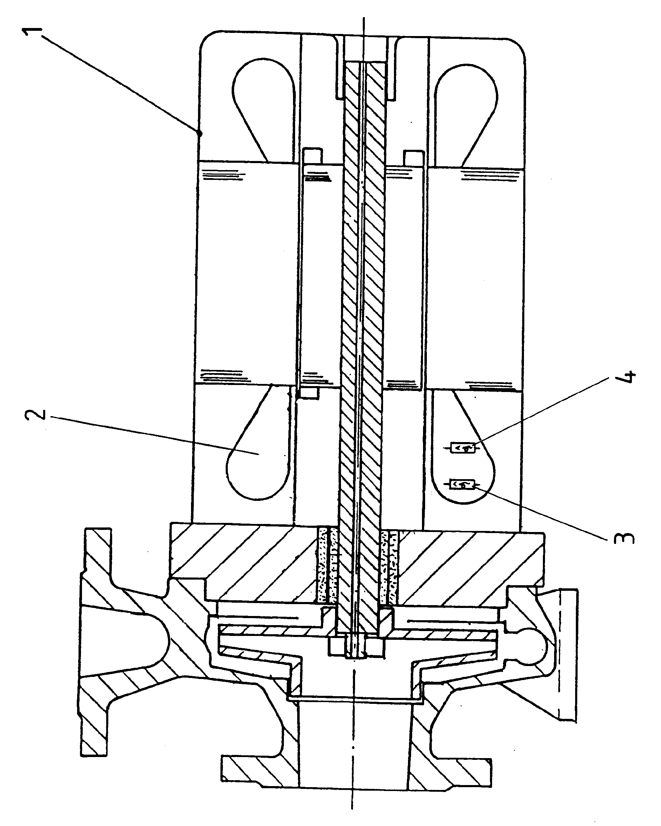

Anhand eines Ausführungsbeispiels wird der Erfindung näher erläutert. Die Zeichnung zeigt einen Ausschnitt aus einem Spaltrohrmotor.

Im Bereich des Wickelkopfes (1) des Spaltrohrmotors (2) sind zwei Schalter (3) und (4) angeordnet, die zwei benachbarten Temperaturklassen der Explosionsschutz-Vorschriften entsprechen. In Anpassung an die jeweils geltende Temperaturklasse wird bei der Installation des Spaltrohrmotors (2) entweder der Schalter (3) oder der Schalter (4) angeklemmt.

## Patentansprüche

1. Sicherheitsschalteinrichtung zur Einhaltung einer durch eine gestufte Einteilung in Explosionsschutz-Klassen vorgegebenen Begrenzung der Betriebstemperatur eines Spaltrohrmotors (2), **dadurch gekennzeichnet,** daß der Spaltrohrmotor (2) zwei oder mehrere auf unterschiedliche Grenztemperaturen ansprechende Schalter (3, 4) an einer für die Oberflächentemperatur aussagefähigen Stelle besitzt, wobei nur der für die jeweils gewählte Explosionsschutz-Klasse maßgebliche Schalter (3 oder 4) als Signalgeber für die Sicherheitseinrichtung dient.

## Claims

1. A safety device for maintaining a predetermined limit of the operational temperature of a canned motor (2) as given by a graded division in the anti-explosion classes, characterized in that the canned rotor motor (2) has two or more switches (3 and 4) responsive to different limiting temperatures on a part relevant for the surface temperature, only the switch (3 or 4) which is relevant for the respectively selected anti-explosion class functioning as a pickup for the safety device.

## Revendications

1. Dispositif de commutation de sécurité ayant fonction de maintenir une limitation de la température de service d'un moteur à gaine (2) prédonnée par une division graduelle en classes de protection antidéflagrante caractérisé en ce que le moteur à gaine (2) possède, à un endroit permettant de déterminer la température de surface, deux ou plusieurs interrupteurs (3, 4) réagissant à des températures limites diverses, seul l'interrupteur correspondant à la classe de protection antidéflagrante choisie servant de transmetteur de signaux pour le dispositif de sécurité.
